# EUROPÄISCHE PATENTSCHRIFT

(11) **EP 1 760 447 B1**
(45) Veröffentlichungstag und Bekanntmachung des Hinweises auf die Patenterteilung: **07.07.2010**
(21) Anmeldenummer: 06017733.4
(22) Anmeldetag: 25.08.2006
(51) Int. Cl.: G01M 17/08, G01M 19/00

(54) **Mobile Klimakammer**
Mobile climate chamber
Chambre climatisée mobile

(30) Priorität: 02.09.2005 DE 102005042034
(43) Veröffentlichungstag der Anmeldung: 07.03.2007
(73) Patentinhaber: Deutsche Bahn AG, 10785 Berlin (DE)
(72) Erfinder: Meister, Michael, 32427 Minden (DE)
(74) Vertreter: Zinken-Sommer, Rainer

(56) Entgegenhaltungen:
- DE-A1- 4 305 901
- DE-U1- 29 903 255
- US-A- 5 574 226

## Beschreibung

Die Erfindung betrifft eine Klimakammer zur messtechnischen Erfassung des thermischen Komforts in einem Prüfobjekt und für witterungsabhängige Funktionsprüfungen an diesem Prüfobjekt.

Prüfobjekte wie z.B. Schienenfahrzeuge werden bei unterschiedlichen klimatischen Bedingungen betrieben. Insbesondere müssen Schienenfahrzeuge ebenso kalte Winternächte mit Temperaturen von bis zu - 40°C und extrem geringer Luftfeuchte wie auch heiße Sommertage mit Temperaturen von z.T. 60°C bei direkter Sonneneinstrahlung und sehr hoher Luftfeuchte ohne Beeinträchtigung ihrer Funktionstüchtigkeit überstehen. Desweiteren muss gewährleistet sein, dass der Komfort und hierbei insbesondere der thermische Komfort für Reisende in den Schienenfahrzeuge zu jeder klimatischen Bedingungen gewährleistet ist.

Aus DE 299 03 255 U1 ist ein ortsfester Klima-Wind-Kanal bekannt, in dem schienengebundene Fahrzeuge - u.a. mithilfe eines Wärmetauschers und eines Wasserinjektors im Luftstrom des Windkanals - einer klimatischen Simulation von Regen, Schnee, Licht und unterschiedlichen Temperaturen ausgesetzt werden können. Der Windkanal ist dabei so aufgebaut, dass die Gesamtmessstrecke mithilfe von Trennwänden in mehrere Teilmessstrecken aufgeteilt werden kann. Mit dem Klima-Wind-Kanal können die Funktionstüchtigkeit und der thermische Komfort insbesondere von Schienenfahrzeugen überprüft werden. Hierbei wird ein Schienenfahrzeug in den Klima-Wind-Kanal gefahren und das Schienenfahrzeug von außen mit dem gewünschten Klima wie Temperatur, Luftfeuchte, Sonnenstrahlung, Windgeschwindigkeit, etc. beaufschlagt.

Nachteil dieser Lösung ist jedoch, dass aufgrund der Größe und Komplexität eines Klima-Wind-Kanals nur wenige Klima-Wind-Kanäle zur Verfügung stehen. Hierdurch ergibt sich als weiterer Nachteil, dass die Überprüfung von Schienenfahrzeugen in einem Klima-Wind-Kanal mit hohen Kosten verbunden ist.

Mobile Klimakammern an sich sind aus dem Stand der Technik hinreichend bekannt.

So ist eine Vorrichtung zur Betonnachbehandlung beim Betonieren von Tunnelgewölben bekannt, die als Klimakammer ausgebildet ist (DE 197 01 861 A1). Die Wirkung der Klimakammer ist nach außen auf das Tunnelgewölbe gerichtet. Sie wird von einer fachwerkartigen Tragkonstruktion gestützt und bewegt sich auf Rollen durch den Tunnel.

Bekannt ist ein mobiler Behälter zum Transportieren und Kompostieren und/oder Trocknen von Abfällen, der als Klimakammer ausgebildet ist (DE 199 30 223 A1). Der Container weist eine Klimaanlage auf, wobei die Luft gekühlt und entfeuchtet wird. Die vordere Wand des Containers kann montiert und demontiert werden, um den Abfall ein- bzw. auszuladen. Diese Wand weist zudem Be- und Entlüftungseinrichtungen auf.

Auch DE 35 41 334 A1 beschreibt eine mobile Klimatisierungsvorrichtung, die als beweglicher Container ausgebildet ist. Keine dieser mobilen Klimaeinrichtungen ist geeignet, Schienenfahrzeuge einer Funktionsprobe bezüglich stark wechselnder bzw. extremer Klimaeinflüsse zu unterziehen.

Es ist somit Aufgabe der Erfindung, eine Klimakammer bereitzustellen, mit der eine einfache und kostengünstige Überprüfung von Schienenfahrzeugen gewährleistet wird.

Diese Aufgabe wird in Verbindung mit dem Oberbegriff des Anspruches 1 erfindungsgemäß durch die in Anspruch 1 angegebenen Merkmale gelöst.

Ansprüche 2 bis 5 beinhalten vorteilhafte Ausführungsbeispiele der erfindungsgemäßen Lösung aus Anspruch 1.

Erfindungsgemäß besteht die Klimakammer aus in einem Stützportal angeordneten Dämmelementen, die sich reversibel auf- und wieder abbauen lassen und das Objekt umschließen. Ein Klimagerät bringt Luft in die Klimakammer ein bzw. wälzt Luft in der Klimakammer um, wobei über Wärmetauscher des Klimagerätes, über die die Luft geführt wird, die unterschiedlichen klimatischen Bedingungen eingestellt werden.

Die Dämmelemente werden im Raster des Stützportales zusammengefügt und umschließen das zu untersuchende Objekt derartig, dass es von den Dämmelementen umgeben ist. Der Boden bleibt hierbei insbesondere unverändert, d.h. so wie er vor Zusammenbau der Dämmelemente war.

An einem zusätzlich an der Luftansaugung des Prüfobjektes angebrachten Kanal ist in vorteilhafter Weise ein regelbarer Stützlüfter sowie Einrichtungen zur Kühlung, Heizung und Befeuchtung der angesaugten Luft angebracht.

Besonders vorteilhaft sind handelsübliche Dämmelemente, insbesondere gemäß Anspruch 3 sogenannte Styroporschalungssteine oder PUR-Sandwichplatten gemäß Anspruch 4, die gemäß Anspruch 5 an ihren Außenkanten eine Nut-Federverbindung aufweisen und mit denen man um das Prüfobjekt einen thermisch isolierten Raum errichtet. Diesen Raum klimatisiert man je nach Bedarf und schafft so die für Klimauntersuchungen notwendigen Randbedingungen. Die Klimatisierung erfolgt über die in dieser Klimakammer umgewälzte Luft, wobei die Wärme-/Kälteeinbringung über Wärmetauscher, über die diese Luft geführt wird, erfolgt. Nach Prüfungsende können die Isolierelemente wieder abgebaut und um das nächste Objekt herum aufgebaut werden.

Vorteil der erfindungsgemäßen Vorrichtung ist, dass eine mobile Klimakammer an verschiedenen Standorten ohne größeren Aufwand auf- und wieder abgebaut werden kann.

Nach Anspruch 6 ist das Klimagerät ein externes Klimagerät, das von außen an die Klimakammer über mindestens eine Zuleitung angeschlossen ist.

Soll das Objekt in seiner Gesamtheit mit den unterschiedlichen klimatischen Bedingungen beaufschlagt werden, stellt diese ein externes Klimagerät über entsprechend konditionierte Luft ein. Das externe Klimagerät ist hierbei über mindestens eine Zuleitung mit der Klimakammer verbunden.

Nach Anspruch 7 kann die Herstellung der für die Prüfung notwendigen Luftfeuchtigkeit in der Klimakammer durch eine Befeuchtung der von der Klimaanlage des Prüfobjektes angesaugten Außenluft vereinfacht werden.

Zur Vermeidung von Taupunktunterschreitungen am Wärmetauscher sind gemäß Anspruch 8 an diesem Adsorptionsmittel angebracht, welche entstehende Kondensate aufnehmen.

Alternativ oder zusätzlich ist der Wärmetauscher gemäß Anspruch 9 mit einer Abtauautomatik gekoppelt.

Gemäß Anspruch 10 ist an der Stirnseite der Klimakammer zusätzlich zum Klimagerät im Prüfobjekt ein weiteres Klima-/Luftbehandlungsgerät angeordnet, welches mit einem Kanalsystem zur Umlufterzeugung in der Klimakammer verbunden ist.

An mindestens einer Wand, vorzugsweise an einer Stirnwand, ist gemäß Anspruch 11 ein reversibles Tor (z. B. ein Drehfalt- oder ein Rolltor) angeordnet, welches zum schnellen Hinein- und Hinausbefördern des Prüfobjektes geeignet ist.

Die Erfindung wird nachstehend anhand eines Ausführungsbeispiels und einer Zeichnung mit einer Figur näher erläutert.

Dabei zeigen:
- **Figur** 1 - er Längsschnitt eines Schienenfahrzeuges (1), mit umgebender mobiler Klimakammer (2)

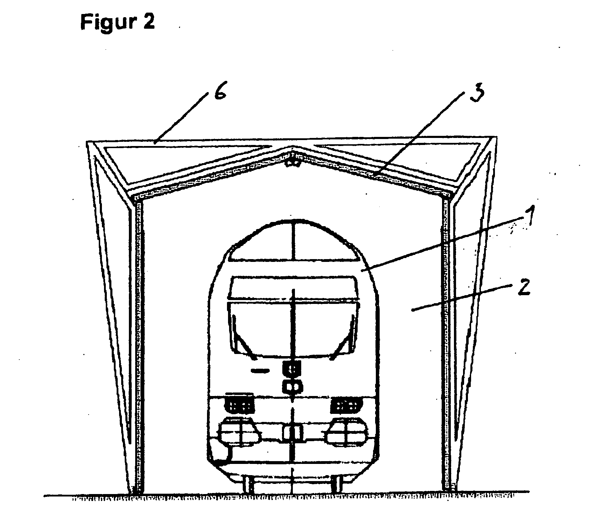

- Figur 2 - Querschnitt einer mobilen Klimakammer mit Prüfobjekt
- Figur 3 - schematische Darstellung der Luftführung in einer mobilen Klimakammer
- Figur 4 - schematisch Darstellung der Instrumentierung und der Leitwarte

### Bauliche Struktur

Die Art und Weise wie die Wände und Decke einer mobilen Klimakammer (2) realisiert werden, bestimmt maßgeblich sowohl die Qualität des Klimas in der Kammer als auch die "Mobilität" der Kammer (leichter Auf- und Abbau) an sich. Zwei Gesichtspunkte sind deshalb von entscheidender Bedeutung für das Konzept:
■ Thermische Isolierung auch unter Berücksichtigung der Wärmeverluste auf Grund von Infiltration durch Undichtheiten sowie
■ Handhabbarkeit der Wand- und Deckenelemente.

Folgende Variante ist auf Grund ihrer Unempfindlichkeit gegenüber Witterungs- und mechanischen Einflüssen sowie wg. der flexibel verfügbaren Maße die vorteilhafteste:
Die als Dämmelemente (3) verwendeten PUR-Sandwichplatten sind auf der Innen- und Außenfläche mit Blech beschichtet. Dazwischen befindet sich zur Dämmung ein Kern aus lsolierschaum. Solche Platten kann man in Breiten bis ca. 1,1 m und nahezu beliebigen Längen erhalten. Der Aufbau einer Wand einer Klimakammer (2) erfolgt durch Aneinanderreihung / Aufmauern solcher Platten bis zur erforderlichen Höhe. An den Plattenstößen erfolgt die Verbindung mittels einer Nut- und Federverbindung. Abgestützt wird solch eine Wand mittels einer Stahlkonstruktion, die sich periodisch alle 5 m wiederholt. Die Decke wird analog aus den gleichen Elementen aufgebaut und liegt an der Traufe und am First auf der Stahlkonstruktion auf. Bei einer handelsüblichen Stärke von 10 cm beträgt der Wärmedurchgangswert ca. 0,22 W/(m²K). Ein einzelnes Element mit den Maßen (B x H x T) 1,1 m x 5 m x 0,1 m wiegt ca. 60 kg.

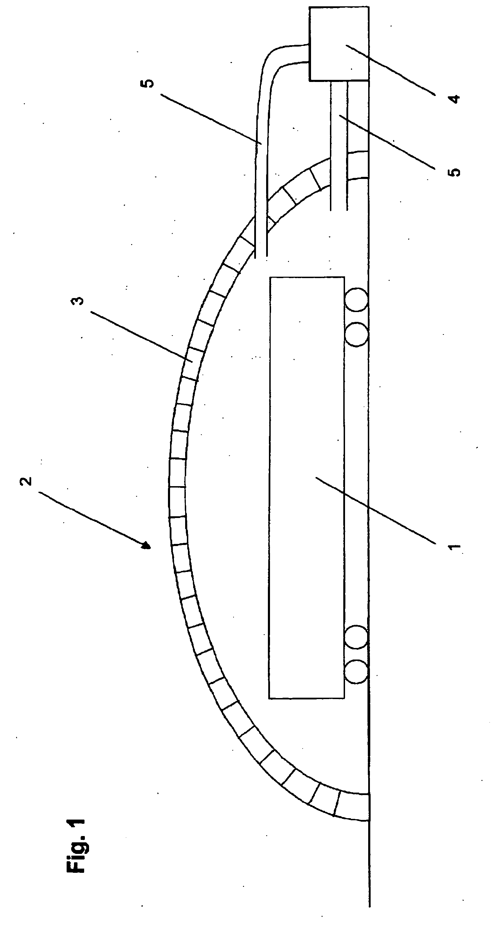

Das Figur 1 zeigt den Querschnitt einer mobilen Klimakammer mit Prüfobjekt.

Diese Konstruktion besteht aus einem sich alle 5 m wiederholenden Stahlportal, das wiederum aus drei zusammenschraubbaren Einzelteilen besteht. Dieses Stahlportal wird im Betonboden verankert. Die PUR-Sandwichplatten der Wände und des Dachs werden mittels Halteprofilen an diesen Stahlportalen fixiert. An einer Stirnwand befindet sich ein durchfahrbares Tor, an der anderen Stirnwand eine ca. 2x2 m große Türe.

### Kälte- und Heizleistung

Die Durchführung von Klimakomfortprüfungen in einer mobilen Klimakammer (2) soll unabhängig von den am Aufstellort herrschenden, äußeren klimatischen Bedingungen möglich sein. Für die Berechnung der Kälte- bzw. der Heizleistung in der mobilen Klimakammer (2) ist es daher erforderlich, für diese klimatischen Bedingungen die jeweiligen Extremwerte für die Außentemperatur anzunehmen. Das heißt, für den Kühlbetrieb der mobilen Klimakammer (2) ist die höchste anzunehmende Außentemperatur und für den Heizbetrieb die niedrigste Außentemperatur heranzuziehen.

Für den Kühlfall der Kammer (Heizfall des Zuges) wird dabei der Wärmeeintrag durch den zu prüfenden Zug konservativ zu 40 kW angesetzt. Für den Heizfall der Kammer (Kühlfall des Zuges) wird dabei konservativ ein Wärmeeintrag von 0 kW angesetzt. Als Ergebnis dieser Berechnung ergeben sich die in Tabelle 1 gezeigten Werte für die benötigte Kälte- und Heizleistung.

**Tabelle 1: Benötigte Kälte- und Heizleistung bei extremen Außenbedingungen**

| **Kammertemperatur** | **Außentemperatur** | **Kälteleistung** | **Heizleistung** |
|---|---|---|---|
| **in °C** | **in °C** | **in kW** | **in kW** |
| -20 | 30 | 65 | - |
| 40 | -10 | - | 40 |

Die in Tabelle 1 ausgewiesene Heiz- bzw. Kälteleistung ist für die Aufrechterhaltung der benötigten Kammertemperaturen notwendig (stationärer Betrieb). Diese Leistungen sind jedoch normalerweise bei akzeptablen Zeiten für den Anfahrvorgang nicht ausreichend. Deshalb wurde eine vereinfachte, dynamische Berechnung durchgeführt. Beispielhaft wurden der Abkühlvorgang von +20°C auf -10°C (bei einer Außentemperatur von +30°C) sowie der Aufheizvorgang von 10°C auf 40°C (bei einer Außentemperatur von -10°C) numerisch simuliert. Als Eingangsparameter dienten die Angaben aus Anlage 1 "Heizbetrieb" bzw. "Kühlbetrieb". Die installierte Kälteleistung wurde mit 65 kW bei einer Temperaturdifferenz von 5 K über dem Wärmetauscher angesetzt. Die installierte Heizleistung wurde zu 40 kW angesetzt.

Das verwendete Rechenprogramm berücksichtigt die Dämpfungseffekte der vorhandenen Wärmekapazitäten (Betonboden, Wagenmasse). Sie vernachlässigt durch den Wagen eingebrachte Wärme- bzw. Heizlasten.

Die so errechneten zeitlichen Verläufe der Lufttemperatur in der Klimakammer (2) zeigt Diagramm 2.

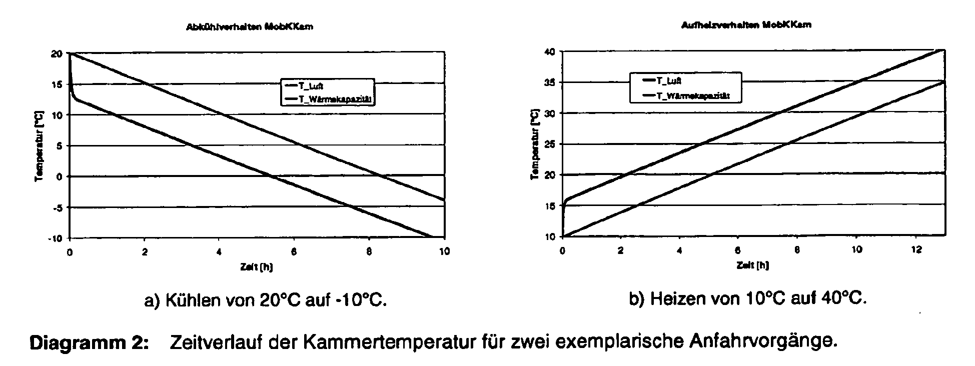

Für das Kühlszenario (Bild 2a) war nach ca. 10 Stunden die Solltemperatur von -10°C erreicht. Für das Heizszenario (Bild 2b) war nach ca. 13 Stunden die Solltemperatur von 40°C erreicht.

Bei in der mobilen Klimakammer (2) installierten Kühl- und Heizleistungen von 65 kW bzw. 40 kW wären die in den Eisenbahnklimanormen DIN EN 13129 [1] und DIN EN 14750 [2], Test Level 2 geforderten Prüfabläufe ca. zur Hälfte, der Test Level 1 der DIN EN 14750 [2] zur Gänze leistbar. Ebenfalls wäre es möglich, k-Wert-Messungen (auch gefordert in DIN EN 13129 [1] und DIN EN 14750 [2]) durchzuführen.

### Klimatisierung

Bei der Bereitstellung des Klimas in einer mobilen Klimakammer (2) sind folgende Problemstellungen genauer zu betrachten:
■ Befeuchtung bei hohen Kammertemperaturen,
■ Entfeuchtung bei Kammertemperaturen unter 0°C,
■ Temperaturverteilung/Luftführung in der Kammer.

### Befeuchtung bei hohen Kammertemperaturen

Um eine mobilen Klimakammer (2) unter realistischen Bedingungen zu testen, ist es erforderlich, dass bei Kammertemperaturen über 20°C die von der Anlage angesaugte Außenluft befeuchtet wird. Bei stationären Klimakammern wird üblicherweise das gesamte Kammervolumen befeuchtet. In einer mobilen Klimakammer (2) ist jedoch mit höheren Infiltrationsluftwechseln zu rechnen, so dass es schwierig erscheint abzuschätzen, wie hoch die Menge des zu verdampfenden Wassers wegen dieser eindringenden Luftmenge ist. Als wirtschaftliche Alternative bietet sich die Konditionierung lediglich der von der Klimaanlage (4) angesaugten Luft an. Dies hätte zwei Vorteile: Zum einen würde lediglich die tatsächlich notwendige Menge an Luft befeuchtet, zum zweiten ist dieses Problem wesentlich einfacher rechnerisch zu erfassen, zu dimensionieren und zu realisieren. Die Klimaanlage (4) erhält die Luft also aus einem an der Außenluftansaugung zusätzlich angebrachten Kanal, in dem die isotherme Luftbefeuchtung (7) durch Verdampfung erfolgt. Zum Ausgleich der durch diesen zusätzlichen Kanal eingebrachten Druckverluste, die die Klimaanlage (4) beeinflussen würden, ist zusätzlich noch ein regelbarer Stützlüfter notwendig.

Das Problem der Befeuchtung bei hohen Kammertemperaturen kann also relativ einfach durch Befeuchtung der vom Prüfling angesaugten Außenluft umgangen werden.

### Entfeuchtung bei Kammertemperaturen unter 0°C

Bei Kammertemperaturen unter 0°C kommt es am Wärmetauscher normalerweise zur Kondensation und zum anschließenden Ausfrieren der Luftfeuchtigkeit. Trifft man keine Gegenmaßnahmen, wachsen die Lamellen des Wärmetauschers mit Eis zu und die Luft kann ihn nicht mehr durchströmen. Im Extremfall kann durch Frostsprengung auch eine Zerstörung des Wärmetauschers eintreten.

Es bieten sich zwei Lösungswege dieses Problems an:
1. Die Kammerluft wird mittels Adsorptionsmaterialien derart getrocknet, dass am Wärmetauscher keine Taupunktunterschreitung mehr eintritt. Solche Adsorptionssysteme arbeiten kontinuierlich, indem ein Teil der umgewälzten Luft über ein hygroskopisches Material geleitet wird. Dies adsorbiert einen Teil der Luftfeuchtigkeit und wird an einer anderen Stelle des Gerätes trockengeheizt. Danach wird es wieder der Kammerluft zugeführt.
2. Das Klimagerät (4) besitzt eine so genannte Abtauautomatik des Wärmetauschers. In diesem Fall wird bei Gefahr des Zueisens für kurze Zeit die Temperatur der durchströmenden Flüssigkeit über den Gefrierpunkt erhöht und es kommt zum Abtauen des Eises. Unter der Voraussetzung dass die Klimakammerwände nicht besonders undicht sind, würde so auch eine nachhaltige Trocknung der Kammerluft eintreten, so dass nach einer gewissen Zeit auch keine große Beeinträchtigung durch kurzzeitige Temperaturerhöhungen eintreten würde.

Auch bei diesem Problemfeld bieten sich also Lösungen an, um eine anforderungsgerechte mobile Klimakammer (2) zu realisieren.

### Temperaturverteilung/Luftführung in der Kammer

Um eine genügend homogene Temperaturverteilung in der Kammer zu erreichen, ist es erforderlich, den umgewälzten Luftvolumenstrom deutlich über das für diese Kälte/Heizleistungen übliche Maß zu erhöhen. Bei einem Luftvolumenstrom von 50000 m³/h ergäbe sich über dem Wärmetauscher lediglich eine Temperaturdifferenz von ca. 2 K, wenn eine Kammertemperatur von -10°C herrscht. Bei einem Kammerquerschnitt von - 30 m² und einem Querschnitt des Prüfobjekts von 10 m² ergäbe sich im Spalt zwischen Wagen und Kammerwand eine Windgeschwindigkeit von ca. 3 km/h.

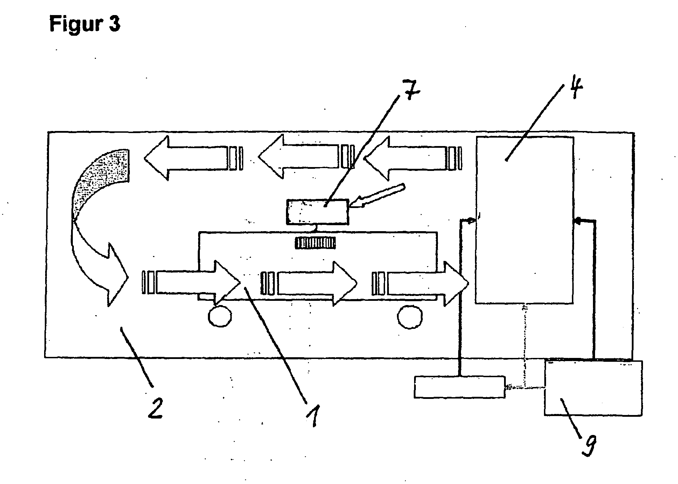

Die Art der Luftführung in der mobilen Klimakammer (2) ist in Figur 3 schematisch dargestellt. Die Luftführung beeinflusst naturgemäß die Qualität der Temperaturverteilung im Prüfraum. Prinzipiell wurde eine Durchströmung längs des Schienenfahrzeugs (1) angestrebt, weil dies zum einen dem Fahrtwind in der Realität am nächsten kommt und zum Anderen so auch inhomogen eingebrachte Warmluft am besten durchmischt wird.

Der an einer Stirnwand befindliche Klima-/Luftbehandlungsgerät (4) befördert über ein einfaches Kanalsystem die behandelte Luft ans andere Ende der mobilen Klimakammer (2). Die Luft strömt im Umluftprinzip am Prüfobjekt (1) entlang und zurück zum Lüfter.

### Energieversorgung

Die Anforderungen an die Energieversorgung (9) der zum Betrieb einer mobilen Klimakammer (2) verwendeten Aggregate sind im Wesentlichen folgende:
■ 380 V / 3∼-Spannungsversorgung, 125 A zur Speisung des Kälteaggregats,
■ 380 V / 3∼-Spannungsversorgung, 63 A zur Speisung der Luftbefeuchtung,
■ 380 V / 3∼-Spannungsversorgung, 100 A zur Speisung des Heizaggregats, des Luftbehandlungsgeräts und der Luftverteilungseinrichtungen,
■ 380 V / 3∼-Spannungsversorgung, 32 A zur Speisung von Regeleinrichtungen und Instrumentierung.

Da diese Anforderungen häufig nicht oder nur teilweise durch die vor Ort verfügbare Infrastruktur erfüllt sein werden, muss in diesen Fällen auf handelsübliche Mietaggregate zur Stromerzeugung zurückgegriffen werden.

### Instrumentierung, Elektroinstallation

Die Instrumentierung einer mobilen Klimakammer (2) beinhaltet:
■ Erfassung der Kammerbedingungen (10) (Lufttemperatur, -feuchtigkeit, - geschwindigkeit),
■ Brandmeldeanlage (11),
■ Videoüberwachung (12),
■ Beleuchtung.

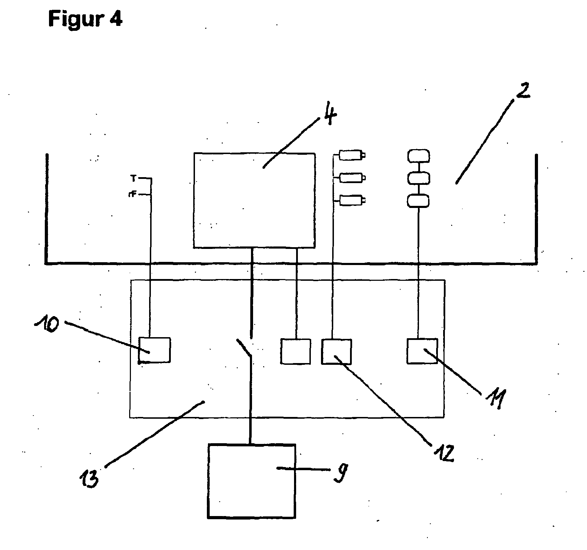

Diese Funktionen werden in einer neben der mobilen Klimakammer (2) befindlichen Leitwarte (13) zentral zusammengeführt und überwacht. Diese Leitwarte (13) enthält die zur Datenerfassung und Temperaturregelung notwendigen Rechner und Anlagen. Eine Prinzipdarstellung ist in Figur 4 gegeben.

Die messtechnische Ausrüstung für die Durchführung der Klimakomfortprüfung im Fahrzeug erfolgt unabhängig von der Instrumentierung. Die Datenerfassung jedoch erfolgt auch zentral in der Leitwarte.

Diese Leitwarte wird in einem handelsüblichen Bürocontainer untergebracht.

### Auf- und Abbau

Der Aufbau einer mobilen Klimakammer (2) erfolgt schrittweise:
■ Zuerst werden die Fußpunkte der Stützen gebohrt und im Beton befestigt. Gleichzeitig kann das Zusammenfügen der einzelnen Elemente der Stützkonstruktion (6) am Boden erfolgen. Diese Elemente werden mit Hilfe eines Krans aufgerichtet und an den Fußpunkten verschraubt. Untereinander werden diese Elemente mittels Längsträgern verbunden. Mit diesem Arbeitsschritt ist die tragende Struktur fertig gestellt.
■ Nun werden mit zwei Rollgerüsten und einer fahrbaren Hebebühne die Isolationspaneele schichtweise übereinander gefügt und an der Stützkonstruktion (6) befestigt. Sie bilden so die Seitenwände und das Dach.
■ Als letzter Punkt erfolgt die Anbringung des Tors (8) bzw. der Türe. Danach ist die mobilen Klimakammer (2) errichtet und die Instrumentierung (Abschnitte 5.3 und 5.5) im Inneren kann angebracht werden.

Der Abbau erfolgt analog in umgekehrter Reihenfolge.

### Bezugszeichenliste

- 1: Schienenfahrzeug
- 2: mobile Klimakammer
- 3: Dämmelement
- 4: Klimagerät
- 5: Zuleitung
- 6: Stützportal/Stützkonstruktion
- 7: Luftbefeuchtung
- 8: Tor
- 9: Energieversorgung
- 10: Erfassung Kammerklima
- 11: Brandmeldeanlage
- 12: Videoüberwachung
- 13: Leitwarte

## Patentansprüche

1. Klimakammer zur Beaufschlagung eines Prüfobjektes, insbesondere eines Schienenfahrzeugs, mit unterschiedlichen klimatischen Bedingungen, wobei ein Klimagerät die klimatischen Bedingungen innerhalb der Klimakammer einstellt, **dadurch gekennzeichnet, dass** die Klimakammer (2) aus Dämmelementen (3) besteht, die sich in einem Stützportal (6) reversibel auf- und wieder abbauen lassen und das Prüfobjekt umschließen, das Klimagerät (4) in die Klimakammer (2) Luft einbringt und/oder in der Klimakammer (2) Luft umwälzt und Wärmetauscher, über die die Luft geführt wird, die unterschiedlichen klimatischen Bedingungen einstellen.

2. Klimakammer zur Beaufschlagung eines Prüfobjektes mit unterschiedlichen klimatischen Bedingungen nach mindestens einem der Ansprüche 1 bis 2, **dadurch gekennzeichnet, dass** an dem zusätzlich an der Luftansaugung angebrachten Kanal ein regelbarer Stützlüfter angebracht ist.

3. Klimakammer zur Beaufschlagung eines Prüfobjektes mit unterschiedlichen klimatischen Bedingungen nach Anspruch 1, **dadurch gekennzeichnet, dass** die Dämmelemente (3) Styroporschalungssteine sind.

4. Klimakammer zur Beaufschlagung eines Prüfobjektes mit unterschiedlichen klimatischen Bedingungen nach mindestens einem der Ansprüche 1 und 3, **dadurch gekennzeichnet, dass** die Dämmelemente (3) PUR-Sandwichplatten sind.

5. Klimakammer zur Beaufschlagung eines Prüfobjektes mit unterschiedlichen klimatischen Bedingungen nach mindestens einem der Ansprüche 1 bis 4, **dadurch gekennzeichnet, dass** die Plattenstöße mittels Nut- und Federverbindung verbunden sind.

6. Klimakammer zur Beaufschlagung eines Prüfobjektes mit unterschiedlichen klimatischen Bedingungen nach mindestens einem der Ansprüche 1 bis 5, **dadurch gekennzeichnet, dass** das Klimagerät (4) ein externes Klimagerät ist, das von außen an die Klimakammer (2) über mindestens eine Zuleitung (5) angeschlossen ist.

7. Klimakammer zur Beaufschlagung eines Prüfobjektes mit unterschiedlichen klimatischen Bedingungen nach mindestens einem der Ansprüche 1 bis 6, **dadurch gekennzeichnet, dass** von der gesamten Luft des Kammervolumens nur die angesaugte Außenluft an der Außenluftansaugung der Klimaanlage (4) des Prüfobjektes (1) mit Wasserdampf befeuchtet wird.

8. Klimakammer zur Beaufschlagung eines Prüfobjektes mit unterschiedlichen klimatischen Bedingungen nach mindestens einem der Ansprüche 1, **dadurch gekennzeichnet, dass** am Wärmetauscher Adsorptionsmaterialien zur Vermeidung von Taupunktunterschreitungen angebracht sind.

9. Klimakammer zur Beaufschlagung eines Prüfobjektes mit unterschiedlichen klimatischen Bedingungen nach mindestens einem der Ansprüche 1 und 8, **dadurch gekennzeichnet, dass** der Wärmetauscher mit einer Abtauautomatik gekoppelt ist.

10. Klimakammer zur Beaufschlagung eines Prüfobjektes mit unterschiedlichen klimatischen Bedingungen nach mindestens einem der Ansprüche 1 bis 9, **dadurch gekennzeichnet, dass** an einer Stirnseite der Klimakammer (2) ein Klima-/Luftbehandlungsgerät (4) angeordnet ist, der mit einem Kanalsystem zur Umlufterzeugung verbunden ist.

11. Klimakammer zur Beaufschlagung eines Prüfobjektes mit unterschiedlichen klimatischen Bedingungen nach mindestens einem der Ansprüche 1 bis 10, **dadurch gekennzeichnet, dass** sich an mindestens einer Wand der Klimakammer (2), vorzugsweise an der Stirnwand ein reversibel auf- und abbaubares Tor (8) angeordnet ist, welches zum schnellen Hinein- und Hinausbefördern des Prüfobjektes (1) geeignet ist.

12. Klimakammer zur Beaufschlagung eines Prüfobjektes mit unterschiedlichen klimatischen Bedingungen nach Anspruch 11, **dadurch gekennzeichnet, dass** das Tor (8) als Drehfalt - oder Rolltor ausgebildet ist.

## Claims

1. A climate chamber for exposing a test object, more preferably a rail vehicle, to different climatic conditions, wherein an air-conditioning device establishes the climatic conditions within the climate chamber, **characterized in that** the climate chamber (2) consists of insulating elements (3) which can be reversibly mounted and dismounted in a support portal (6) and enclose the test object, **in that** the air-conditioning device (4) introduces air in the climate chamber (2) and/or circulates air in the climate chamber (2) and heat exchangers, via which the air is conducted, establish the different climatic conditions.

2. The climate chamber for exposing a test object to different climatic conditions according to at least one of the Claims 1 to 2, **characterized in that** on the ducting additionally attached to the air intake a controllable support fan is attached.

3. The climate chamber for exposing a test object to different climatic conditions according to Claim 1, **characterized in that** the insulating elements (3) are styrene shuttering blocks.

4. The climate chamber for exposing a test object to different climatic conditions according to at least one of the Claims 1 and 3, **characterized in that** the insulating elements (3) are PUR sandwich panels.

5. The climate chamber for exposing a test object to different climatic conditions according to at least one of the Claims 1 to 4, **characterized in that** the panel butt joints are joined by means of groove and tongue joints.

6. The climate chamber for exposing a test object to different climatic conditions according to at least one of the Claims 1 to 5, **characterized in that** the climate device (4) is an external climate device which is connected from the outside to the climate chamber (2) via at least one supply line (5).

7. The climate chamber for exposing a test object to different climatic conditions according to at least one of the Claims 1 to 6, **characterized in that** of the entire air of the chamber volume only the sucked-in outside air is humidified with steam on the outside air intake of the air-conditioning system (4) of the test object (1).

8. The climate chamber for exposing a test object to different climatic conditions according to at least one of the Claims 1 to 7, **characterized in that** on the heat exchanger adsorption materials to avoid dew point undershooting are attached.

9. The climate chamber for exposing a test object to different climatic conditions according to at least one of the Claims 1 to 8, **characterized in that** the heat exchanger is coupled with an automatic defroster.

10. The climate chamber for exposing a test object to different climatic conditions according to at least one of the Claims 1 to 9, **characterized in that** on a face end of the climate chamber (2) a climate/air-conditioning device (4) is arranged which is connected to a ducting system for circulating air generation.

11. The climate chamber for exposing a test object to different climatic conditions according to at least one of the Claims 1 to 10, **characterized in that** on at least one wall of the climate chamber (2), preferentially on the face wall, a gate (8) that can be reversibly installed and removed is arranged, which is suitable for the rapid inward and outward transporting of the test object (1).

12. The climate chamber for exposing a test object to different climatic conditions according to Claim 11, **characterized in that** the gate (8) is designed as a rotary folding or roller gate.

## Revendications

1. Cellule climatique permettant de solliciter un objet testé, notamment un véhicule ferroviaire, avec différentes conditions climatiques, un appareil climatiseur créant les conditions climatiques à l'intérieur de la cellule climatique, **caractérisé en ce que** la cellule climatique (2) est composée d'éléments isolants (3) qui peuvent être montés et démontés de manière réversible dans un portail support (6) et entourent l'objet testé, que l'appareil climatiseur (4) fait rentrer de l'air dans la cellule climatique (2) et/ou fait circuler de l'air dans la cellule climatique (2) et que des échangeurs de chaleur dans lesquels on fait passer l'air créent les différentes conditions climatiques.

2. Cellule climatique permettant de solliciter un objet testé avec différentes conditions climatiques selon au moins une des revendications 1 à 2, **caractérisée en ce qu'**un ventilateur de soutien est installé au niveau du canal prévu en plus au niveau de l'aspiration d'air.

3. Cellule climatique permettant de solliciter un objet testé avec différentes conditions climatiques selon la revendication 1, **caractérisée en ce que** les éléments isolants (3) sont des éléments en coque de polystyrène expansé.

4. Cellule climatique permettant de solliciter un objet testé avec différentes conditions climatiques selon au moins une des revendications 1 et 3, **caractérisée en ce que** les éléments isolants (3) sont des panneaux sandwichs en PUR.

5. Cellule climatique permettant de solliciter un objet testé avec différentes conditions climatiques selon au moins une des revendications 1 à 4, **caractérisée en ce que** les jointures entre les panneaux sont assemblées au moyen de raccords à rainure et languette.

6. Cellule climatique permettant de solliciter un objet testé avec différentes conditions climatiques selon au moins une des revendications 1 à 5, **caractérisée en ce que** l'appareil climatiseur (4) est un appareil climatiseur externe qui est raccordé par l'extérieur à la cellule climatique (2) par au moins une conduite d'alimentation (5).

7. Cellule climatique permettant de solliciter un objet testé avec différentes conditions climatiques selon au moins une des revendications 1 à 6, **caractérisée en ce que**, sur l'ensemble de l'air du volume de la cellule, seul l'air extérieur aspiré au niveau de l'aspiration d'air extérieure du climatiseur (4) de l'objet testé (1) est humidifié par de la vapeur d'eau.

8. Cellule climatique permettant de solliciter un objet testé avec différentes conditions climatiques selon la revendication 1, **caractérisée en ce que** des matériaux adsorbants permettant d'éviter de passer en dessous du point de rosée sont installés au niveau de l'échangeur de chaleur.

9. Cellule climatique permettant de solliciter un objet testé avec différentes conditions climatiques selon au moins une des revendications 1 à 8, **caractérisée en ce que** l'échangeur de chaleur est couplé à un automatisme de dégivrage.

10. Cellule climatique permettant de solliciter un objet testé avec différentes conditions climatiques selon au moins une des revendications 1 à 9, **caractérisée en ce qu'**un appareil de climatisation/traitement de l'air (4) qui est raccordé à un système de canalisation pour générer une circulation d'air est disposé au niveau d'une face frontale de la cellule climatique (2).

11. Cellule climatique permettant de solliciter un objet testé avec différentes conditions climatiques selon au moins une des revendications 1 à 10, **caractérisée en ce qu'**une porte (8) pouvant être montée et démontée de manière réversible et qui est adaptée pour rentrer et sortir rapidement l'objet testé (1) est disposée sur au moins une paroi de la chambre climatique (2), de préférence sur la paroi frontale.

12. Cellule climatique permettant de solliciter un objet testé avec différentes conditions climatiques selon la revendication 11, **caractérisée en ce que** la porte (8) se présente sous forme d'une porte à soufflet pivotante ou roulante.
